# EUROPEAN PATENT APPLICATION

(11) **EP 4 001 071 A1**
(43) Date of publication of application: **25.05.2022**
(21) Application number: 20383023.7
(22) Date of filing: 24.11.2020
(51) Int. Cl.: B62J 1/08, B62J 1/12, B62J 9/14

(54) **SEAT FOR MOTORCYCLES**

(71) Applicant: Win Life Electric Vehicles, S.L., 08021 Barcelona (ES)
(72) Inventor: LOSANTOS SISTACH, Josep, 08021 BARCELONA (ES)
(74) Representative: Herrero & Asociados, S.L.

(57) **Abstract**

The seat for motorcycles comprises a support body (1) for a user to sit on, a base (2), on which the support body (1) is slidably positioned; a locking element (3) arranged on the support body (1), which can be housed in one of a plurality of recesses (22) made in the base (2); an unlocking lever (4), which moves the locking element (3) from a locking position, in which the locking element (3) is housed in one of the recesses (22), to an unlocking position, in which the locking element (3) is outside the recesses (22), allowing the support body (1) to slide on the base (2).

It allows the seat position to be easily adjusted, simply by operating the unlocking lever and placing the support body in the desired position.

## Description

The present invention relates to a seat for motorcycles, the position of which is adjustable.

### Background of the invention

Motorcycles usually comprise a seat that is fixed and cannot be adjusted to the specific needs of each user in terms of position. For this reason it is common for the motorcycle seat to have an elongated shape with considerable dimensions.

In the case of bicycles, these include a saddle that is adjustable in height to adjust it to the height of the user. Its regulation is usually carried out by means of a handle that allows to release or lock in position a bar attached to the saddle that is housed in a telescopic way in a housing of the bicycle frame.

On the other hand, in cars the seats are adjustable, horizontally and vertically, so that the driver's position with respect to the steering wheel and the pedals is adequate to facilitate driving the car.

Therefore, although the function of regulating the position of the seats in vehicles is known, this function is not usual in motorcycles. However, it would be advisable if the user of the motorcycle could also adjust the position of the seat according to the user's needs.

### Disclosure of the invention

Therefore, an objective of the present invention is to provide a seat for motorcycles, the position of which can be adjusted both in height and in depth, allowing the user to select the appropriate position according to his/her needs.

With the seat for motorcycles of the invention said disadvantages are solved, presenting other advantages that will be described below.

The seat for motorcycles according to the present invention comprises a support body for a user to sit on, wherein the seat also comprises:
- a base, on which the support body is slidably positioned;
- a locking element arranged on the support body, which can be housed in one of a plurality of recesses made in the base;
- an unlocking lever, which moves the locking element from a locking position, in which the locking element is housed in one of the recesses, to an unlocking position, in which the locking element is outside the recesses, allowing the support body to slide on the base.

Thanks to this feature, the position of the seat can be easily adjusted, simply by operating the unlocking lever and placing the support body in the desired position.

Advantageously, the locking element is in contact with elastic means that push the locking element into the locking position.

Furthermore, the locking element is advantageously connected to the unlocking lever by means of a pull cable.

According to a preferred embodiment, the locking element is a plate, and the elastic means are formed by two springs, which are placed symmetrically with respect to the center of the locking element.

To allow height and depth adjustment, the support body slides on the base in an inclined manner. This way, the base defines an upper surface and a lower surface, which form an acute angle.

According to a preferred embodiment, the support body is formed by an upper part and a lower part.

Furthermore, the lower part advantageously comprises projections that are housed in corresponding grooves in the base.

According to a preferred embodiment, the lower part has a U-shape, seen in a plan view.

On the other part, the upper part preferably comprises a projection as a support for the padded body.

### Brief description of the drawings

For better understanding of what has been disclosed, some drawings in which, schematically and only by way of a non-limiting example, a practical case of embodiment is shown.

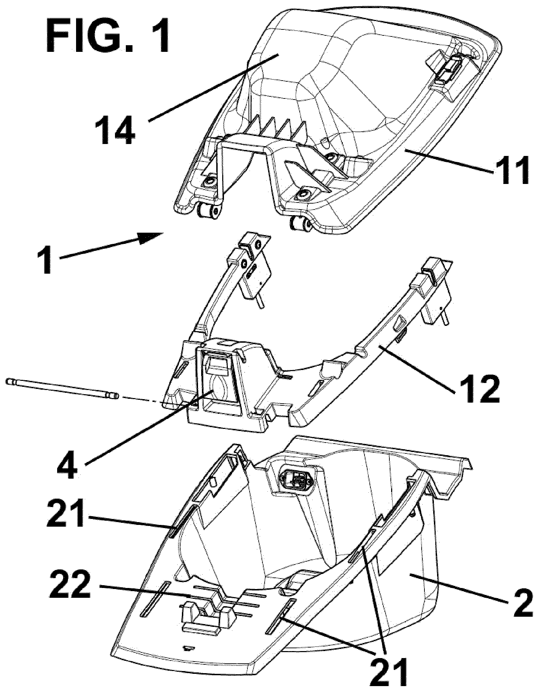

Figure 1 is an exploded perspective view of the seat of the present invention, where the support body, with its upper and lower parts separated, and the base can be seen;
Figure 2 is a perspective view of the lower part of the support body and the base;
Figure 3 is an exploded perspective view of the lower part of the support body;
Figure 4 is a sectioned elevation view of the seat according to the present invention, in the locking position;
Figure 5 is a sectioned elevation view of the seat according to the present invention, in the unlocking position;
Figure 6 is a perspective view of the seat according to the present invention in its upper position;
Figure 7 is a perspective view of the seat according to the present invention in its middle position; and
Figure 8 is a perspective view of the seat according to the present invention in its lower position;

### Description of a preferred embodiment

The seat for motorcycles according to the present invention comprises a support body, generally identified by the reference number 1, for a user to sit on, and a base 2, the support body 1 being movable with respect to the base 2, sliding on it.

It should be noted that a padded body, not shown in the figures, is placed on the support body 1 for the comfort of the user.

The base 2 defines an upper surface and a lower surface, which form an acute angle, so that the support body 1 slides on the base 2 in an inclined manner.

The support body 1 is formed by an upper part 11 and a lower part 12 that are joined together, and the lower part 12 is slidably mounted on the base 2.

The upper part 11 comprises a projection 14 that serves as a support for the padded body, while the lower part 12 has a U-shape, seen in a plan view.

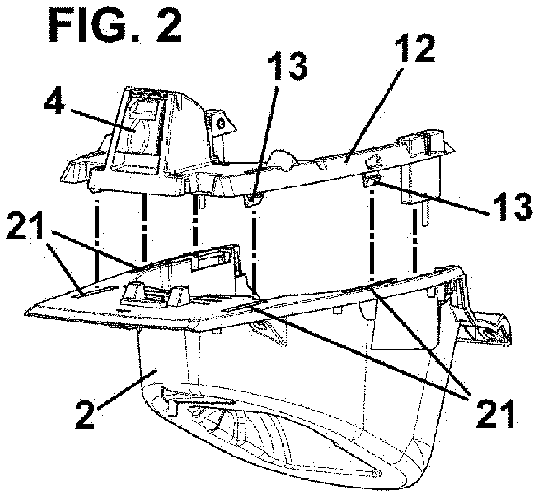

As shown in figure 2, the lower part 12 comprises projections 13 that are housed in complementary grooves 21 of the base 2.

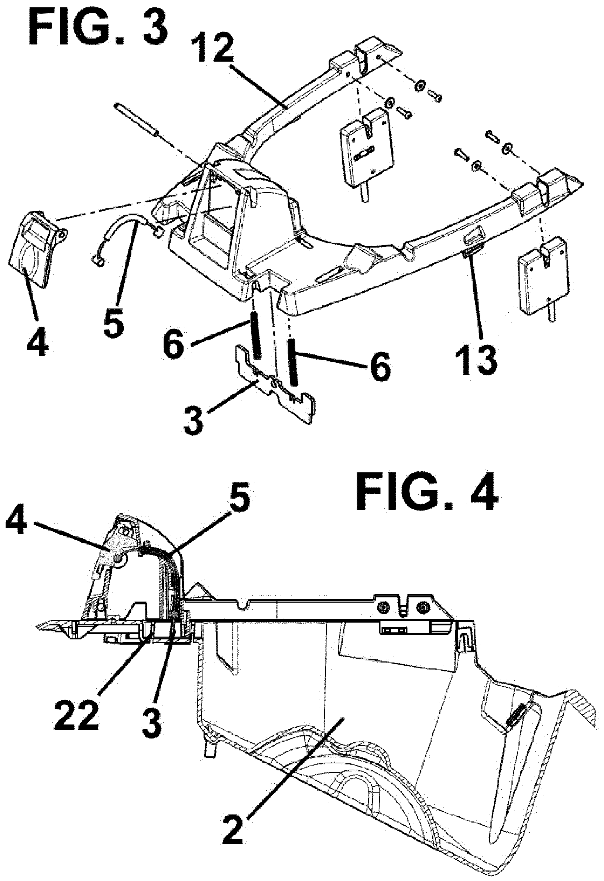

The lower part 12 of the support body 1 is shown in more detail in figure 3. As can be seen in this figure, the lower part 12 comprises a locking element 3 that is linked to an unlocking lever 4 through a pull cable 5.

Said locking element 3 can be placed in two positions, which will be described in more detail below: a locking position and an unlocking position, and on said locking element 3 springs 6 apply pressure to push the locking element 3 to its locked position.

As can be seen in figure 3, according to the embodiment shown, the locking element 3 is plate-shaped and the springs 6 are arranged symmetrically with respect to the center of said locking element 3. Furthermore, the pull cable 5 is also fixed to the locking element 3 in a middle position.

In figure 4 the seat for motorcycles according to the present invention is shown in a section elevation view, the locking element 3 being in its locking position. In this locking position, the locking element 3 is housed in a recess 22 of the base 2. It should be noted that the base 2 comprises a plurality of recesses 22, one for each position in which the support body 1 can be placed (three in the case of the embodiment shown).

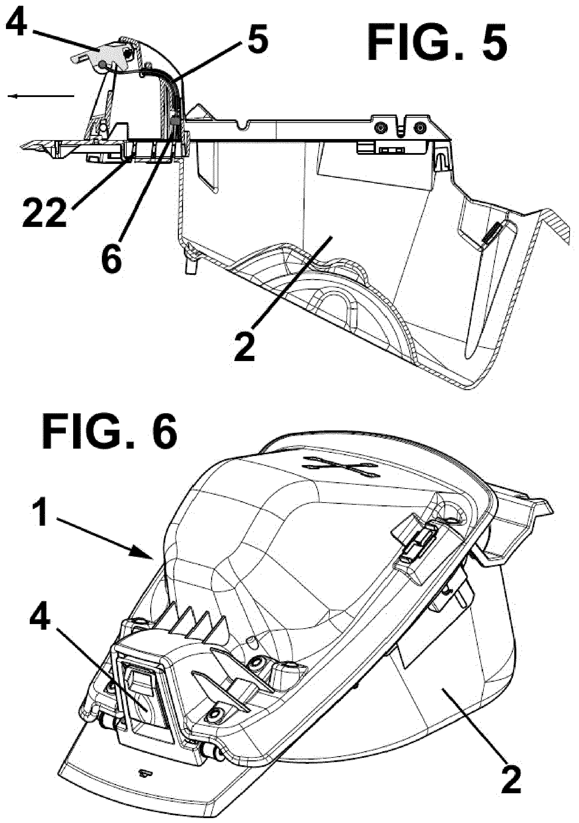

To move the support body 1 with respect to the base 2, the user must actuate the unlocking lever 4. By actuating the lever 4, the locking element 3 is moved to the unlock position shown in figure 5 through the pull cable 5.

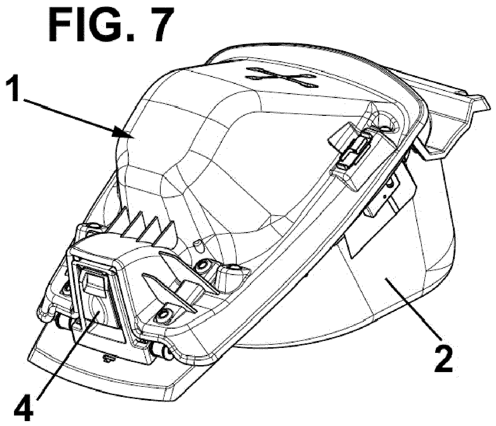

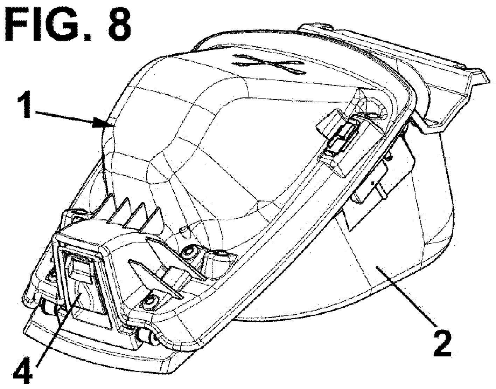

In the unlocked position, the locking element 3 comes out of the recess 22, allowing the displacement of the support body 1 to any of the predetermined positions, which are shown in figures 6 to 8.

In particular, in figures 6 to 8 the support body 1 is shown in an upper, middle and lower position, respectively.

Once the support body 1 has been placed in the desired position, the user releases the unlocking lever 4 and the springs 6 push the locking element 3 into the corresponding recess 22.

Although reference has been made to specific embodiments of the invention, it is apparent to a person skilled in the art that the disclosed seat for motorcycles is susceptible of numerous variations and modifications, and that all the details mentioned can be replaced by other technically equivalents, without departing from the scope of protection defined by the appended claims.

## Claims

1. Seat for motorcycles, comprising a support body (1) for a user to sit on, **characterized in that** the seat also comprises:
- a base (2), on which the support body (1) is slidably positioned;
- a locking element (3) arranged on the support body (1), which can be housed in one of a plurality of recesses (22) made in the base (2);
- an unlocking lever (4), which moves the locking element (3) from a locking position, in which the locking element (3) is housed in one of the recesses (22), to an unlocking position, in which the locking element (3) is outside the recesses (22), allowing the support body (1) to slide on the base (2).

2. Seat for motorcycle according to claim 1, wherein the locking element (3) is in contact with elastic means (6) that push the locking element (3) into the locking position.

3. Seat for motorcycles according to claim 1 or 2, wherein the locking element (3) is connected to the unlocking lever (4) by means of a pull cable (5).

4. Seat for motorcycles according to any one of the previous claims, wherein the locking element (3) is a plate.

5. Seat for motorcycles according to claim 2, wherein the elastic means are formed by two springs (6).

6. Seat for motorcycles according to claim 1, wherein the support body (1) slides on the base (2) in an inclined manner.

7. Seat for motorcycles according to claim 1 or 6, wherein the base (2) defines an upper surface and a lower surface, which form an acute angle.

8. Seat for motorcycles according to any one of the previous claims, wherein the support body (1) is formed by an upper part (11) and a lower part (12).

9. Seat for motorcycles according to claim 8, wherein the lower part (12) comprises projections (13) that are housed in corresponding grooves (21) of the base (2).

10. Seat for motorcycles according to claim 8 or 9, wherein the lower part (12) has a U-shape, seen in a plan view.

11. Seat for motorcycles according to claim 8, wherein the upper part comprises a projection (14) as a support.
